# FASCICULE DE BREVET EUROPEEN

(11) **EP 3 601 985 B1**
(45) Date de publication et mention de la délivrance du brevet: **22.06.2022**
(21) Numéro de dépôt: 18712634.7
(22) Date de dépôt: 28.03.2018
(51) Int. Cl.: G01M 3/28, F16L 17/035

(54) **DISPOSITIFS DE VÉRIFICATION DE L'ÉTANCHÉITÉ, JONCTION TUBULAIRE ET UTILISATION CORRESPONDANTES**
VORRICHTUNG ZUR DICHTUNGSPRÜFUNG, ROHRVERBINDUNG UND ENTSPRECHENDE VERWENDUNG
DEVICES FOR SEAL TESTING, TUBULAR JUNCTION AND CORRESPONDING USE

(30) Priorité: 31.03.2017 FR 1752790
(43) Date de publication de la demande: 05.02.2020
(73) Titulaire: Saint-Gobain Pam Canalisation, 54700 Pont-à-Mousson (FR)
(72) Inventeur: GENELOT, Pierre, 54700 Norroy (FR); LIU, Yang, 54000 Nancy (FR); ALEXANDRE, Pascal, 54200 Toul (FR)
(74) Mandataire: Lavoix
(86) Numéro de dépôt international: PCT/EP2018/058017
(87) Numéro de publication internationale: WO 2018/178201

(56) Documents cités:
- WO-A1-02/40958
- WO-A1-2016/036841
- DE-U1- 29 521 615
- FR-A1- 2 732 743
- GB-A- 952 755
- JP-U- S52 156 589
- KR-A- 20120 001 147
- US-A1- 2004 174 015

## Description

La présente invention concerne un dispositif de vérification de l'étanchéité d'une jonction tubulaire selon le préambule de la revendication 1.

Les jonctions tubulaires de tuyaux en fonte ductile sont très étanches lorsque les tuyaux sont posés correctement. Cependant, lors d'un mauvais positionnement de la garniture d'étanchéité, d'une expulsion de celle-ci lors du montage, d'un endommagement de la garniture d'étanchéité, de la présence de particules diverses telles que du sable par exemple sur la surface du joint en contact avec les tuyaux, ou d'une compression insuffisante de la garniture d'étanchéité, la jonction tubulaire peut ne pas être étanche. Ce défaut d'étanchéité est généralement découvert longtemps après la pose de la jonction tubulaire et après avoir posé de nombreux tuyaux et raccords, lors de l'essai de réception sous pression de la canalisation. Lors de cet essai de réception, la tranchée est généralement déjà remblayée et la localisation de la fuite est alors longue et coûteuse.

WO 2016/036841 décrit une jonction tubulaire.

JP S52 156589 décrit un dispositif de vérification d'étanchéité.

FR 2732743 décrit un dispositif de connexion de deux tubes.

WO 02/40958 décrit un dispositif de vérification d'étanchéité de liaison pour tuyaux ou puits.

DE 295 21 615 décrit un tuyau pour des eaux usées.

KR 2012 0001147 décrit une jonction tubulaire.

La possibilité de diagnostiquer l'étanchéité de la jonction immédiatement après l'emboitage et donc juste après l'établissement de la jonction tubulaire permettrait alors de corriger le risque de fuite pour un coût très faible.

L'invention a donc pour but de rendre l'opération de pose de tuyaux plus économique, et ceci notamment avec des moyens simples. En particulier, elle vise à pouvoir vérifier l'étanchéité d'une jonction tubulaire à faible coût et avec une fiabilité importante.

A cet effet, l'invention a pour objet un dispositif de vérification de l'étanchéité indiqué ci-dessus, caractérisé en ce que ce dispositif comprend les caractéristiques de la revendication 1.

Le canal de mise sous pression est ménagé dans la garniture d'étanchéité.

Le dispositif de vérification selon l'invention peut comporter l'une ou plusieurs des caractéristiques suivantes :
- La cavité de vérification comprend au moins une gorge circonférentielle, notamment faisant tout le tour de la garniture d'étanchéité ou du logement.
- Le dispositif de vérification comprend des moyens de mise sous pression ou des moyens de mise sous dépression adaptés pour être raccordés au canal de mise sous pression et dans lequel les moyens de mise sous pression comprennent au moins l'un des éléments suivants :
   - un générateur de pression, notamment une pompe, et le cas échéant une valve raccordée au canal de mise sous pression, le générateur de pression étant notamment adapté pour être connecté à la valve,
   - un dispositif de réserve de gaz sous pression, notamment une chambre sous pression incorporée dans la garniture d'étanchéité, relié au canal de mise sous pression, et un dispositif de libération, notamment un dispositif percuteur, adapté pour libérer le gaz sous pression vers le canal de mise sous pression;
   - un dispositif générateur de gaz adapté pour générer un gaz sous pression par une réaction chimique de composés solides ou liquides, et un dispositif d'amorçage, tel qu'un percuteur, adapté pour initier la réaction chimique entre les composés ;
   - une cavité de génération de pression, remplie d'un gaz ou d'un mélange de gaz, notamment d'un gaz inerte, ménagée à l'intérieur de la garniture d'étanchéité et qui par la compression de la garniture d'étanchéité lors de l'emboitage génère une augmentation de pression dans la cavité de vérification ou
      dans lequel les moyens de mise sous dépression comprennent :
      - un générateur de dépression, notamment une pompe à vide, et le cas échéant une valve raccordée au canal de mise sous pression, le générateur de dépression étant notamment adapté pour être connecté à la valve.
- Le dispositif de vérification de l'étanchéité comprend un dispositif de mesure adapté pour relever la pression établie par les moyens de mise sous pression dans la cavité de vérification, et notamment de vérifier si cette pression est au-delà d'un seuil déterminé et/ou est maintenue au-delà d'une durée déterminée.
- Le dispositif de mesure comprend :
   - un capteur de pression mécanique, qui est notamment adapté pour générer un changement d'état ou de position d'un indicateur mécanique, électrique ou optique, au cas où la pression est au-delà d'un seuil déterminé et/ou est maintenue au-delà d'une durée déterminée ; ou
   - un capteur de pression électrique, notamment un capteur piézo-électrique ; ou
   - une combinaison des capteurs de pression mécanique et de pression électrique.
- Le dispositif de vérification de l'étanchéité comprend un dispositif d'affichage adapté pour afficher la pression relevée par le dispositif de mesure.
- Le dispositif d'affichage comprend un téléphone portable, un assistant personnel digital, ou un ordinateur, notamment dans lequel le dispositif d'affichage est adapté pour relever l'information concernant la pression et est adapté pour émettre un rapport sur l'étanchéité de la jonction, et/ou dans lequel le dispositif d'affichage est adapté pour géolocaliser la position de la jonction tubulaire, et/ou dans lequel le dispositif d'affichage est relié à un logiciel connecté par internet ou un autre réseau de données, et qui est adapté pour alimenter une base de données à distance et permet un suivi à distance de l'avancement du chantier de pose ;
- le canal de mise sous pression est ménagé dans la garniture d'étanchéité, et
- les moyens de mise sous pression comprennent une protubérance ayant un conduit de connexion qui est en liaison fluidique avec le canal de mise sous pression et qui traverse la protubérance ;
- la protubérance est fixée à un talon d'ancrage de la garniture d'étanchéité ;
- la protubérance ne comprend pas et ne contient pas de valve anti-retour disposée dans le conduit de connexion ;
- Le dispositif de vérification de l'étanchéité comprend des moyens de vérification additionnels adaptés pour vérifier l'étanchéité de la jonction tubulaire en présence d'un liquide sous pression.
- Les moyens de vérification additionnels comprennent des moyens de détection d'un liquide présent dans la cavité de vérification, notamment un capteur de liquide, et de préférence des éléments conducteurs électriques disposés dans la cavité de vérification.

Selon un autre aspect, l'invention concerne un dispositif de vérification de l'étanchéité d'une jonction tubulaire selon la revendication 13.

L'invention a également pour objet une jonction tubulaire, du type comprenant un bout à emboîtement, une garniture d'étanchéité et un bout uni, caractérisée en ce que la jonction tubulaire comprend un dispositif de vérification de l'étanchéité tel que défini ci-dessus.

L'invention a également pour objet l'utilisation d'un dispositif de vérification de l'étanchéité d'une jonction tubulaire comprenant une garniture d'étanchéité, un bout à emboîtement muni d'un logement de garniture d'étanchéité, et un bout uni, caractérisée en ce que le dispositif de vérification est un dispositif tel que décrit ci-dessus et l'utilisation comprend les étapes successives suivantes :
- établissement de la jonction tubulaire par insertion de la garniture d'étanchéité dans le bout à emboîtement et par insertion du bout uni dans la garniture d'étanchéité,
- établissement de la pression du fluide ou d'une dépression dans la cavité de vérification par le canal de mise sous pression,
- vérification de la tenue en pression du fluide sous pression dans la cavité de vérification, ou de la tenue d'une dépression dans la cavité de vérification et/ou
- vérification de l'étanchéité de la jonction tubulaire en présence d'un liquide sous pression circulant dans la jonction tubulaire par les moyens de vérification adaptés pour vérifier l'étanchéité de la jonction tubulaire en présence d'un liquide sous pression circulant dans la jonction tubulaire.

L'invention sera mieux comprise à la lecture de la description qui va suivre, donnée uniquement à titre d'exemple et faite en se référant aux dessins annexés, sur lesquels :
- la figure 1 est une vue en coupe transversale partielle d'une jonction tubulaire selon un premier mode de réalisation de l'invention et comprenant un dispositif de vérification de l'étanchéité;
- la figure 2 est une vue en coupe transversale partielle de la jonction tubulaire de la figure 1 lors de la vérification de l'étanchéité et à l'état étanche ;
- la figure 3 est une vue analogue à celle de la figure 2, montrant une jonction tubulaire non-étanche ;
- la figure 4 est une vue partiellement en coupe et en perspective d'une garniture d'étanchéité d'un dispositif de vérification de l'étanchéité selon l'invention, la garniture d'étanchéité étant à l'état disposée entre le bout à emboîtement et le bout uni, et montre le détail IV agrandi de la figure 5 ;
- la figure 5 est une vue en perspective partiellement arrachée d'une garniture d'étanchéité de la jonction tubulaire selon l'invention, la garniture d'étanchéité étant à l'état disposée entre le bout à emboîtement et le bout uni alors que le bout à emboîtement et le bout uni sont omis, et montre schématiquement des moyens additionnels de vérification de l'étanchéité ;
- la figure 6 montre une vue analogue à celle de la Figure 1 d'une jonction tubulaire comportant un dispositif de vérification de l'étanchéité selon une première variante du premier mode de réalisation ;
- la figure 7 montre un bout à emboîtement d'une jonction tubulaire selon un mode de réalisation exemplaire ne faisant pas partie de l'invention ;
- la figure 8 montre une vue en perspective partiellement arrachée d'une garniture d'étanchéité de la jonction tubulaire selon une seconde variante du premier mode de réalisation de l'invention, la garniture d'étanchéité étant à l'état libre ;
- la figure 9 montre la section radiale de la garniture d'étanchéité de la figure 8 ;
- la Figure 10 est une vue en perspective d'une partie d'un bout à emboîtement de la jonction tubulaire selon la seconde variante du premier mode de réalisation de l'invention ;
- la figure 11 est une vue en coupe de la jonction tubulaire selon la seconde variante du premier mode de réalisation de l'invention pendant l'insertion du bout uni dans le bout à emboitement ;
- la figure 12 est une vue en coupe de la jonction tubulaire selon la seconde variante du premier mode de réalisation, pendant la vérification d'étanchéité ; et
- la figure 13 montre un détail agrandi de la figure 12 en cas de non-étanchéité.

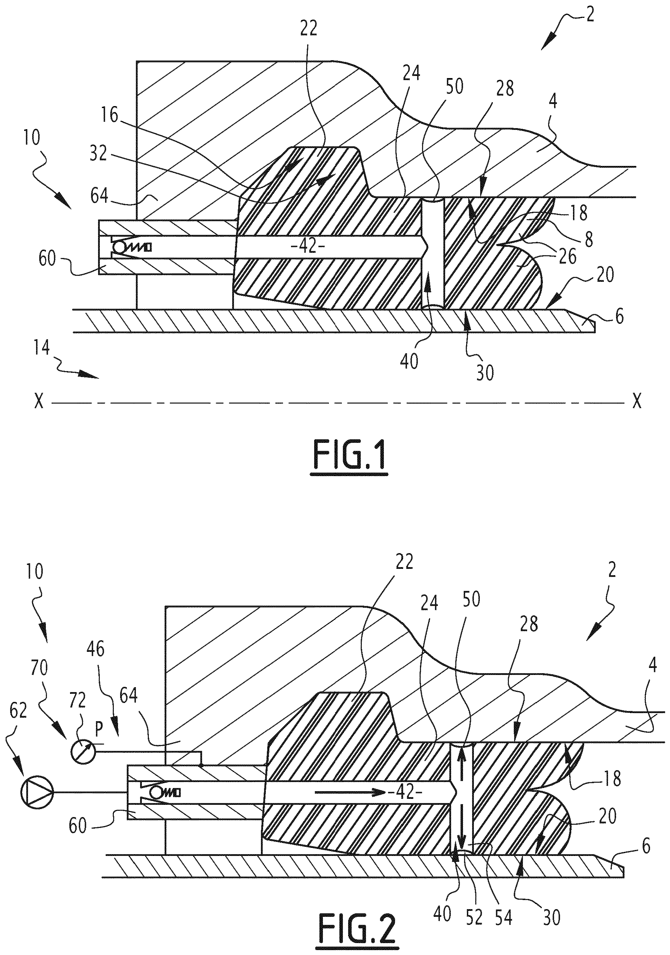

La figure 1 montre une jonction tubulaire selon un premier mode de réalisation, désignée par la référence générale 2, et s'étendant selon un axe central X-X. Dans ce qui suit, sauf indication contraire, les expressions « axialement », « radialement » et « circonférentiellement » seront utilisées par rapport à cet axe central X-X.

La jonction tubulaire 2 comprend un bout à emboîtement 4, un bout uni 6 et une garniture d'étanchéité 8. La jonction tubulaire 2 comprend également un dispositif de vérification 10 de l'étanchéité de la jonction tubulaire.

Le bout à emboitement 4 comprend une entrée 14, une gorge d'ancrage 16 et une surface d'étanchéité intérieure 18. La surface d'étanchéité 18 est disposée axialement à l'opposé de l'entrée 14 par rapport à la gorge d'ancrage 16. La surface d'étanchéité 18 est de préférence cylindrique d'axe X-X et a un diamètre inférieur à une surface de fond de la gorge d'ancrage 16.

Le bout uni 6 comprend une surface d'étanchéité extérieure 20, notamment cylindrique d'axe X-X, qui, à l'état monté de la jonction tubulaire 2, s'étend radialement en face de la surface d'étanchéité intérieure18.

La garniture d'étanchéité 8 est fabriquée en caoutchouc et est éventuellement munie d'inserts d'ancrage ou de verrouillage. La garniture d'étanchéité 8 a une forme générale annulaire et s'étend autour d'un axe central de garniture d'étanchéité Y-Y, qui coïncide, à l'état monté de la jonction tubulaire 2, avec l'axe central X-X.

La garniture d'étanchéité 8 comprend un talon d'ancrage 22 et un corps d'étanchéité 24 ainsi que deux lèvres d'étanchéité 26. A l'état monté de la jonction tubulaire 2, le talon d'ancrage 22 s'étend dans la gorge d'ancrage 16 du bout à emboîtement 4 et fixe la garniture d'étanchéité 8 dans le bout à emboîtement 4 dans le sens axial.

Le corps d'étanchéité 24 définit une surface d'étanchéité extérieure complémentaire 28 et une surface d'étanchéité intérieure complémentaire 30. A l'état monté, la surface d'étanchéité extérieure complémentaire 28 s'applique sur la surface d'étanchéité intérieure 18 du bout à emboîtement 4 et la surface d'étanchéité intérieure complémentaire 30 s'applique sur la surface d'étanchéité extérieure 20 du bout uni 6.

La gorge d'ancrage 16 et la surface d'étanchéité intérieure 18 forment ensemble un logement de garniture d'étanchéité 32 ménagé dans le bout à emboîtement 4.

Le dispositif de vérification 10 est adapté pour vérifier l'étanchéité de la surface d'étanchéité intérieure 18 par rapport à la surface d'étanchéité extérieure complémentaire 28 et de la surface d'étanchéité extérieure 20 par rapport à la surface d'étanchéité intérieure complémentaire 30 lorsqu'elles sont soumises à une pression donnée, dite pression de vérification, et pendant une durée déterminée.

Le dispositif de vérification 10 comprend à cet effet une cavité de vérification 40 et un canal de mise sous pression 42 adapté pour relier la cavité de vérification 40 à des moyens de mise sous pression 46. Les moyens de mise sous pression 46 sont adaptés pour mettre un fluide, notamment un gaz ou un mélange de gaz, contenu dans la cavité de vérification 40 et dans le canal de mise sous pression 42 sous une pression déterminée.

Dans le cas présent, la cavité de vérification 40 est ménagée dans la garniture d'étanchéité 8. La cavité de vérification 40 comprend une gorge circonférentielle extérieure 50 et une gorge circonférentielle intérieure 52. Les gorges circonférentielles extérieure 50 et intérieure 52 font tout le tour autour de l'axe Y-Y, donc tout le tour de la garniture d'étanchéité.

La cavité de vérification 40 comporte également un conduit de liaison 54 reliant les gorges circonférentielles extérieure 50 et intérieure 52 au canal de mise sous pression 42. En l'occurrence, le conduit de liaison 54 est un conduit s'étendant radialement par rapport à l'axe central Y-Y.

En variante, la cavité de vérification 40 peut comporter une gorge circonférentielle extérieure 50 ou une gorge circonférentielle intérieure 52. Dans ce cas, le conduit de liaison 54 ne relie que la gorge circonférentielle extérieure 50 ou la gorge circonférentielle intérieure 52 au canal de mise sous pression 42. D'une manière générale, la cavité de vérification 40 débouche sur la surface d'étanchéité extérieure complémentaire 28 et/ou sur la surface d'étanchéité intérieure complémentaire 30.

Les moyens de mise sous pression 46 comprennent une valve anti-retour 60 raccordée au canal de mise sous pression 42.

Les moyens de mise sous pression 46 comprennent également un générateur de pression 62, par exemple une pompe, adapté à être connecté à la valve anti-retour 60.

Afin de faciliter l'accès à la valve anti-retour 60, la valve anti-retour 60 est disposée sur le talon d'ancrage 22 et s'étend généralement parallèlement à l'axe central Y-Y. Lorsque la jonction tubulaire 2 est à l'état monté, la valve anti-retour 60 est disposée dans un logement ménagé dans une paroi frontale 64 du bout à emboîtement 4. La valve anti-retour 60 est fixée à la garniture d'étanchéité 8 par tout moyen approprié, tel que par vulcanisation et/ou par vissage.

En variante, la valve anti-retour 60 peut être omise. Dans ce cas, le générateur de pression 62 est connecté sans l'intermédiaire d'une valve au conduit de mise sous pression 42.

Le dispositif de vérification 10 de l'étanchéité comprend également un dispositif de mesure 70 adapté pour relever la pression établie par les moyens de mise sous pression 46 dans la cavité de vérification 40. Ce dispositif de mesure 70 est par exemple un capteur de pression mécanique connecté à la cavité de vérification 40 par l'intermédiaire du canal de mise sous pression 42 et de la valve anti-retour 60. Le dispositif de mesure 70 est de préférence adapté pour vérifier si la pression établie est située au-delà d'un seuil déterminé et/ou est maintenue au-delà d'une durée prédéterminée.

Le dispositif de mesure 70 peut comprendre un capteur de pression mécanique qui est adapté pour générer un changement d'état ou de position d'un indicateur mécanique, électrique ou optique au cas où la pression est au-delà d'un seuil prédéterminé et/ou être maintenue au-delà d'une durée prédéterminée.

Le dispositif de vérification 10 de l'étanchéité comprend également un dispositif d'affichage 72 adapté pour afficher la pression relevée par le dispositif de mesure 70. Le dispositif d'affichage 72 et le capteur de pression mécanique peuvent former un manomètre.

La Figure 1 montre la jonction tubulaire selon l'invention à l'état monté, avant l'étape de vérification. La garniture d'étanchéité 8 s'étend entre le bout uni 6 et le bout à emboitement 4. La valve anti-retour 60 est fixée au talon d'ancrage 22 et fait saillie de celui-ci. La valve anti-retour 60 est fermée. La gorge circonférentielle extérieure 50 débouche sur la surface d'étanchéité intérieure 18 et/ou la gorge circonférentielle intérieure 52 débouche sur la surface d'étanchéité extérieure 20.

La figure 2 montre la jonction tubulaire 2 pendant l'étape de vérification. On voit que la pompe 62 établit une pression de vérification, via la valve anti-retour 60, à l'intérieur du canal de mise sous pression 42 et donc dans la cavité de vérification 40. Le fluide, notamment le gaz, présent dans les gorges circonférentielles extérieure 50 et intérieure 52 est en conséquence également soumis à la pression de vérification.

La pression de vérification est par exemple comprise entre 3 et 10 bars, et est de préférence compris entre 3 et 5 bars.

Au cas où la pression de vérification reste stable à l'intérieur d'une gamme de pression et sur une durée déterminée, la jonction tubulaire est déclarée étanche. La relation entre la tenue en pression et l'étanchéité de la jonction est établie expérimentalement et par calculs et dépendra des dimensions des éléments de la jonction tubulaire et des matériaux du bout à emboîtement 4, du bout uni 6 et de la garniture d'étanchéité 8.

Par exemple, si la pression reste sensiblement stable pendant 10 secondes environ, la jonction tubulaire 2 est déclarée étanche.

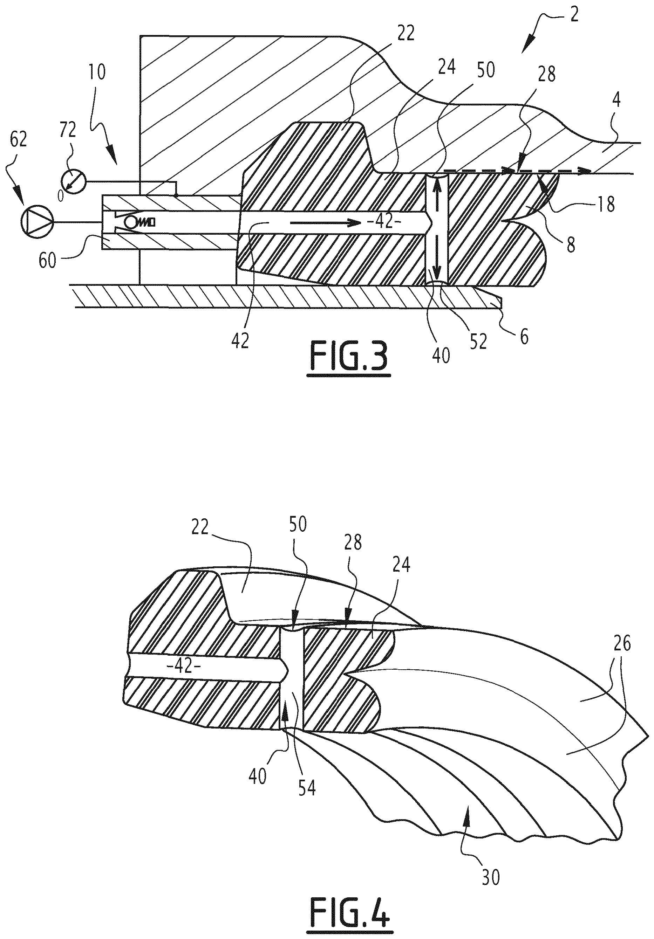

Sur la Figure 3 est représentée la jonction tubulaire dans le cas où elle n'est pas étanche. Le bout uni 6 n'est pas inséré correctement, en l'occurrence il n'est pas inséré assez profondément dans le bout à emboîtement 4. Lors de l'établissement de la pression dans la gorge circonférentielle extérieure 50, le fluide sous pression s'échappe entre la surface d'étanchéité intérieure 18 et la surface d'étanchéité extérieure complémentaire 28. Ce défaut d'étanchéité fait que soit il est impossible avec le générateur de pression 62 d'atteindre la pression de vérification dans la cavité de vérification 40, soit on parvient à établir la pression de vérification dans la cavité de vérification 40, mais elle diminue fortement, assez rapidement, ce qui est détecté par le dispositif d'affichage 72 qui indique alors une pression nulle au bout de quelques secondes. La défaillance de la jonction tubulaire 2 est donc détectée avant la mise en place de la jonction tubulaire suivante et en tout état de cause avant la mise en service de la canalisation finale par circulation de liquide sous pression à travers le bout uni 6 et le bout à emboitement 4.

Le dispositif de vérification 10 de l'étanchéité décrit ci-dessus dans le cadre d'un mode de fonctionnement en pression positive peut aussi, en variante non représentée, être utilisé dans un mode de fonctionnement en dépression ou pression négative, en faisant le vide dans la cavité de vérification 40 et en détectant alors un défaut d'étanchéité s'il est impossible de faire le vide dans la cavité de vérification 40 ou si, après avoir fait le vide dans la cavité de vérification, la pression remonte rapidement au bout de quelques secondes.

Les moyens de mise sous pression décrits précédemment sont alors remplacés par des moyens de mise sous dépression. Ces moyens de mise sous dépression peuvent comprendre un générateur de dépression, notamment une pompe à vide. Ce générateur de dépression est alors raccordé par une valve raccordée au canal de mise sous pression, le générateur de dépression étant notamment adapté pour être connecté à la valve. La structure de la garniture d'étanchéité et du bout à emboitement du mode de réalisation ci-dessus reste inchangée. Le fonctionnement est analogue, mis à part le fait que la pression positive est remplacée par une pression négative. Le terme « canal de mise sous pression » est maintenu pour ce mode de réalisation pour des raisons de lisibilité, même si une dépression est générée dans ce canal.

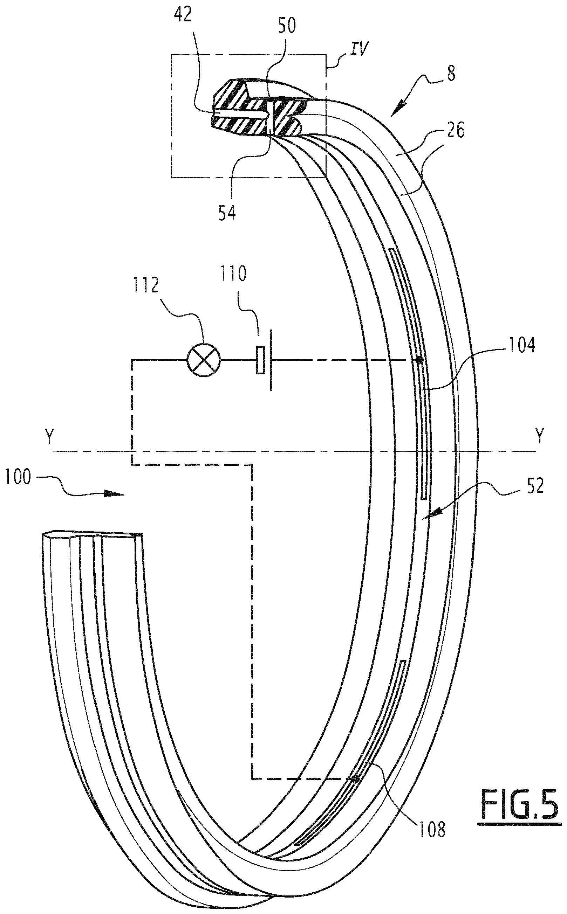

D'une manière optionnelle, et en supplément des éléments décrits ci-dessus, le dispositif de vérification de l'étanchéité 10 comprend des moyens de vérification d'étanchéité additionnels 100, qui sont adaptés pour vérifier l'étanchéité de la jonction tubulaire 2 en présence d'un liquide sous pression circulant dans la jonction tubulaire. Ces moyens de vérification additionnels 100 sont indiqués d'une manière schématique sur la figure 5. Les moyens de vérification additionnels 100 sont des moyens de détection d'un liquide présent dans la cavité de vérification 40, tel qu'un capteur de liquide. Dans le cas présent, le capteur de liquide comporte deux éléments conducteurs électriques 104, 108 disposés dans la gorge circonférentielle intérieure 52. Alternativement ou d'une manière supplémentaire les deux éléments conducteurs électriques 104, 108 sont disposés dans la gorge circonférentielle extérieure 50. Les deux éléments conducteurs électriques 104, 108 sont espacés l'un de l'autre et, en l'absence de liquide conducteur, électriquement isolés l'un de l'autre.

Les moyens de vérification additionnels 100 comprennent un moyen d'indication de connexion électrique entre ces deux éléments conducteurs 104 et 108, tels qu'une source de courant électrique 110 et un voyant 112. Les éléments conducteurs 104, 108, la source de courant électrique 110 et le voyant 112, forment un circuit électrique ouvert en l'absence de liquide dans la cavité de vérification et un circuit électrique fermé en présence de liquide dans la cavité de vérification 40. Ainsi, le voyant 112 est allumé en présence de liquide dans la cavité de vérification 40 et éteint en l'absence de liquide dans la cavité de vérification 40. Ces moyens de vérification additionnels 100 permettent ainsi de détecter des défauts d'étanchéité après mise en service de la canalisation.

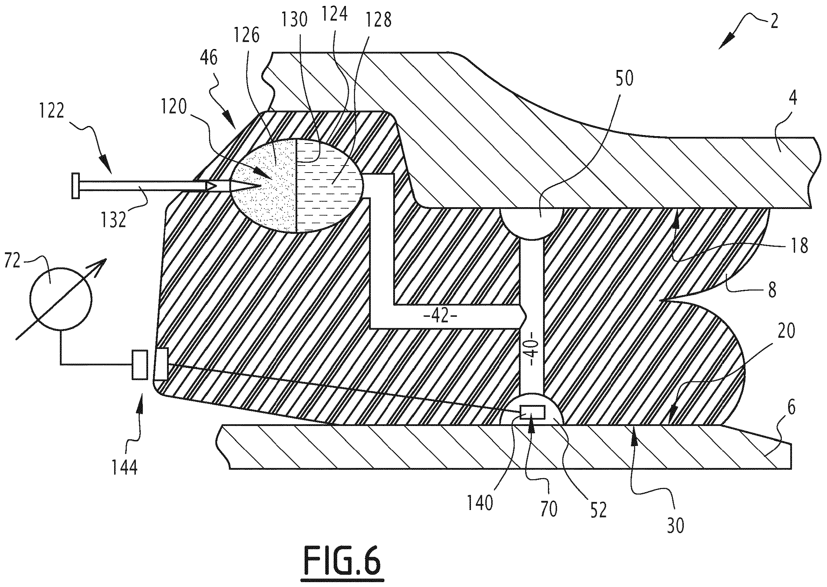

Sur la figure 6 est représentée une jonction tubulaire 2 selon une variante du premier mode de réalisation, qui diffère du premier mode de réalisation uniquement par ce qui suit. Les éléments analogues portent les mêmes références.

Les moyens de mise sous pression 46 ne comportent pas de valve anti-retour reliée au canal de mise sous pression 42. Par contre, les moyens de mise sous pression 46 comprennent un dispositif générateur de gaz 120 adapté pour générer un gaz sous pression et un dispositif d'amorçage 122 de ce dispositif générateur de gaz. Le dispositif générateur de gaz 120 comprend une cavité 124 ménagée dans la garniture d'étanchéité 8. La cavité 124 est séparée en deux chambres 126, 128, séparées par une paroi 130. La chambre 126 comporte un premier composant chimique et la chambre 128 comporte un second composant chimique, les deux composants étant adaptés pour générer un gaz sous pression lorsqu'ils entrent en contact. Ces composants sont par exemple un carbonate et un acide qui, par réaction chimique, génèrent du gaz carbonique.

Le dispositif d'amorçage 122 comprend un percuteur 132. Le percuteur 132 est logé d'une manière déplaçable dans une ouverture de la garniture d'étanchéité 8 et est déplaçable entre une position de repos, tel que représentée sur la figure 6, et une position d'amorçage dans laquelle la paroi 130 est percée par le percuteur et les deux composants entrent en contact et émettent du gaz sous pression vers le canal de mise sous pression 42. Le percuteur 132 peut également être adapté pour percer une paroi qui sépare la chambre 128 et le canal de mise sous pression 42. Alternativement, une paroi qui sépare la chambre 128 et le canal de mise sous pression est adaptée pour rompre sous l'effet de la pression générée par les composants chimiques.

Le dispositif de vérification d'étanchéité de cette variante ne comporte pas de capteur de pression mécanique, mais un capteur de pression électrique, tel qu'un capteur piézoélectrique 140.

Le dispositif d'affichage 72 est relié au dispositif de mesure 70 par une connexion avec ou sans fils, par exemple par une fiche 144. Le dispositif d'affichage peut comprendre un téléphone portable, un assistant personnel digital (PDA), ou un ordinateur. Le dispositif d'affichage peut être adapté pour relever l'information concernant la pression et est adapté pour émettre un rapport sur l'étanchéité de la jonction basé sur la pression relevée. Le dispositif d'affichage peut être adapté pour géolocaliser la position de la jonction tubulaire 2 et relié à un logiciel connecté par internet ou un autre réseau de données adapté pour alimenter une base de données à distance et permettant un suivi à distance de l'avancement de la pose de la canalisation.

Selon des variantes non-représentées de la jonction tubulaire, les moyens de mise sous pression 46 peuvent comprendre :
- un dispositif de réserve de gaz sous pression, par exemple une chambre sous pression incorporée dans la garniture d'étanchéité 8, relié au canal de mise sous pression, et un dispositif de libération, par exemple un dispositif percuteur, adapté pour libérer le gaz sous pression vers le canal de mise sous pression; ou
- une cavité remplie d'air ou d'un gaz inerte à l'intérieur du joint d'étanchéité et qui par la compression de la bague d'étanchéité lors de l'emboitage du bout uni génère une augmentation de pression dans la cavité de vérification, notamment du type « poire de pression ».

La jonction tubulaire 2 du premier mode de réalisation a l'avantage de pouvoir être utilisée avec des bouts unis et des bouts à emboitement connus sans modification ou moyennant la seule modification de ménager le logement pour la valve 60 dans la paroi 64 du bout à emboitement 4. Cette modification peut toutefois être effectuée à faible dépenses.

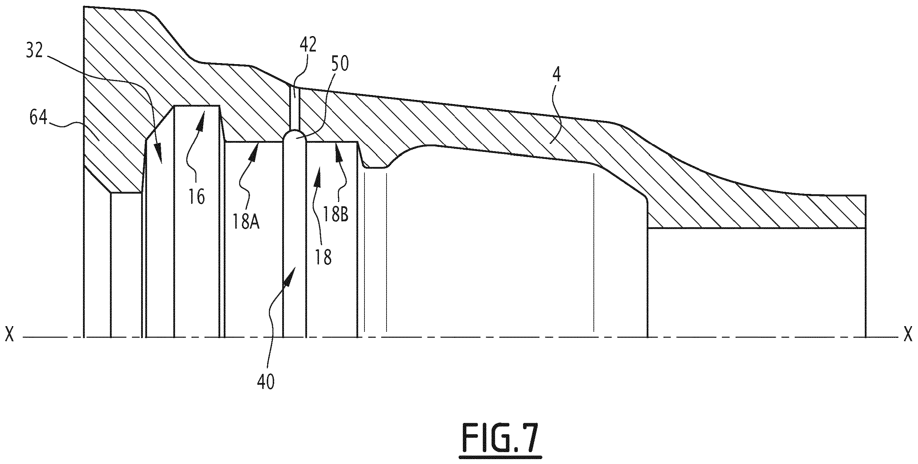

Sur la figure 7 est représenté un mode de réalisation exemplaire ne faisant pas partie de l'invention. Ce mode de réalisation diffère du mode de réalisation précédemment décrit uniquement par ce qui suit. Les éléments analogues portent les mêmes références.

Le canal de mise sous pression 42 est ménagé dans le bout à emboîtement 4. Dans le cas présent, le canal de mise sous pression 42 est formé par un alésage radial traversant le bout à emboîtement. Le canal de mise sous pression 42 est disposé à l'emplacement de la surface d'étanchéité intérieure 18. En outre, la gorge circonférentielle extérieure 50 est ménagée dans le bout à emboîtement 4 et sépare la surface d'étanchéité intérieure 18 en une surface d'étanchéité partielle 18A et une surface d'étanchéité partielle 18B, séparées axialement l'une de l'autre par la gorge circonférentielle extérieure 50. Il est à noter, que la gorge circonférentielle 50, bien qu'étant une gorge ménagée dans le bout à emboîtement 4, est désignée « gorge circonférentielle extérieure 50 » étant donné qu'elle est située radialement à l'extérieur par rapport à une éventuelle gorge circonférentielle intérieure 52 ménagée dans la garniture d'étanchéité 8.

La gorge circonférentielle extérieure 50 fait tout le tour du logement 32 de garniture d'étanchéité.

Ce second mode de réalisation a l'avantage de pouvoir être utilisé avec une garniture d'étanchéité de l'état de la technique qui ne comprend pas de cavité de vérification.

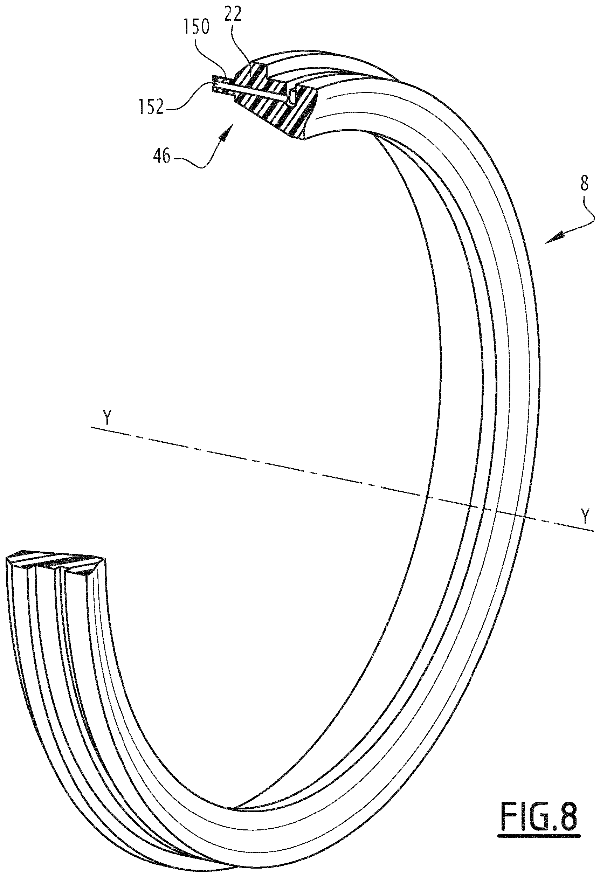

Sur les figures 8 à 13 est représentée une seconde variante de la jonction tubulaire du premier mode de réalisation. La seconde variante diffère de la jonction du premier mode de réalisation uniquement par ce qui suit. Les éléments analogues portent les mêmes références.

La figure 8 montre une vue en perspective partiellement arrachée de la garniture d'étanchéité 8 de la jonction tubulaire. La garniture d'étanchéité 8 est à l'état libre.

Les moyens de mise sous pression 46 ne comprennent pas de de valve anti-retour 60 raccordée au canal de mise sous pression 42. Par contre, les moyens de mise sous pression 46 comprennent une protubérance 150 munie d'un conduit de connexion 152 qui est en liaison fluidique avec le canal de mise sous pression 42 et qui traverse la protubérance 150. La protubérance 150 ne comprend pas et ne contient pas de valve anti-retour disposée dans le conduit de connexion 152.

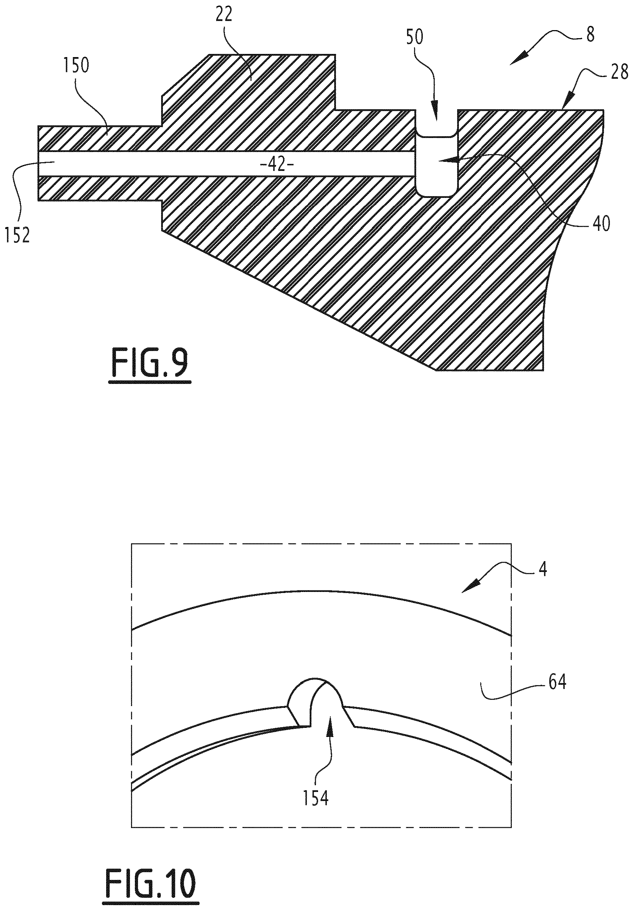

La protubérance 150 est fixée au talon d'ancrage 22 et est en l'occurrence venue de matière avec le talon d'ancrage 22. La protubérance 150 fait saillie du talon d'ancrage 22. La protubérance 150 s'étend généralement parallèlement à l'axe central Y-Y et est de préférence cylindrique. Lorsque la jonction tubulaire 2 est à l'état monté, la protubérance 150 est disposée dans un logement 154 ménagé dans la paroi frontale 64 du bout à emboîtement 4. Ce logement 154 est visible sur la Figure 10 qui est une vue en perspective d'une partie du bout à emboîtement 4 de la jonction tubulaire. Ce logement 154 est une encoche radialement ouverte vers l'intérieur et axialement traversante.

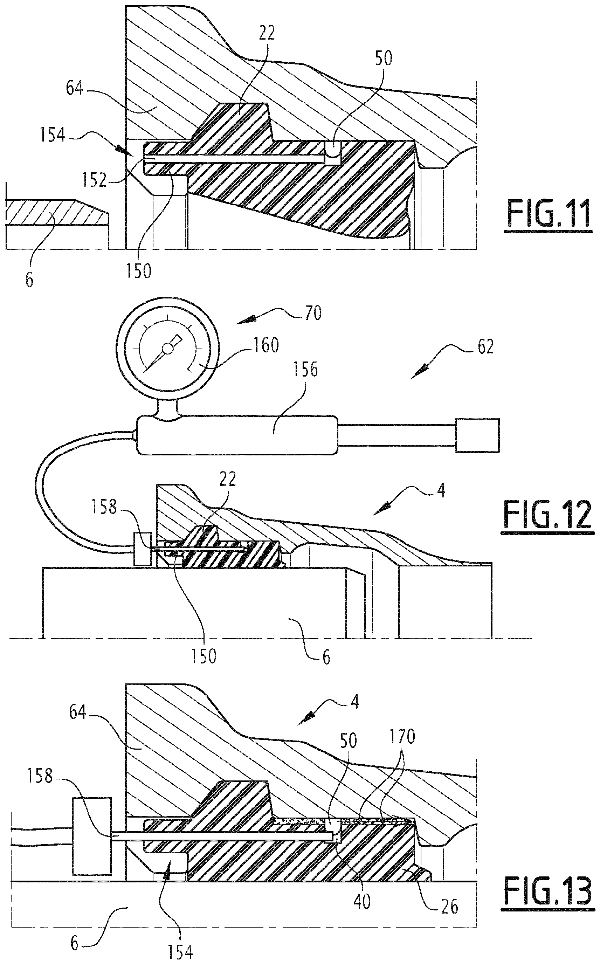

A l'état monté de la garniture d'étanchéité 8 dans le bout à emboitement 4, l'extrémité libre de la protubérance 150 est en retrait par rapport à la surface frontale de la paroi frontale 64 (voir Figure 11).

En variante non représentée, la protubérance 150 n'est pas venue de matière avec le talon d'ancrage 22 ou avec la garniture d'étanchéité 8. Dans ce cas, la protubérance 150 est fixée à la garniture d'étanchéité 8 par tout moyen approprié, tel que par vulcanisation, pas collage et/ou par vissage.

Par ailleurs, selon la seconde variante de la jonction tubulaire du premier mode de réalisation, la cavité de vérification 40 comporte une gorge circonférentielle extérieure 50 mais non pas de gorge circonférentielle intérieure 52. Le conduit de liaison 54 ne relie donc que la gorge circonférentielle extérieure 50 au canal de mise sous pression 42.

La figure 11 est une vue en coupe de la jonction tubulaire 2 pendant l'insertion du bout uni 6 dans le bout à emboitement 4.

En variante non représentée, la protubérance 150 peut être omise. Dans ce cas, le générateur de pression 62 est connecté sans l'intermédiaire de protubérance au conduit de mise sous pression 42.

La vérification de l'étanchéité de la jonction 2 est illustrée sur la figure 12. Le générateur de pression 62, par exemple une pompe 156, est adapté à être connecté à la protubérance 150, par exemple par un embout 158 en forme d'aiguille.

L'embout 158 est inséré dans le conduit de connexion 152 et la pompe 156 établit la pression dans la gorge circonférentielle extérieure 50.

Le dispositif de mesure 70 est un capteur de pression mécanique ou un manomètre 160 connecté à la cavité de vérification 40 par l'intermédiaire du canal de mise sous pression 42 et la protubérance 150. Dans le cas présent, le dispositif de mesure 70 est intégré dans le corps de la pompe 156.

La figure 13 montre le détail de la jonction tubulaire selon la seconde variante de la jonction tubulaire du premier mode de réalisation, en cas de non-étanchéité. Du sable ou du gravier 170 de remblaiement est intercalé entre la surface d'étanchéité extérieure complémentaire 28 et le bout à emboitement 4 et laisse échapper de l'air sous pression se trouvant dans la gorge circonférentielle extérieure 50 et la cavité de vérification 40. Ceci conduit à une réduction de la pression de vérification qui est détectée par le manomètre 160, ou à une impossibilité d'établir la pression de vérification dans la cavité de vérification 40.

Selon un mode de réalisation supplémentaire non-représenté, qui est une variante du premier mode de réalisation, la jonction tubulaire selon l'invention est munie d'un dispositif de vérification de l'étanchéité 10 qui ne comprend que des moyens de vérification d'étanchéité adaptés pour vérifier l'étanchéité de la jonction tubulaire 2 en présence d'un liquide sous pression circulant dans la jonction tubulaire, identiques aux moyens de vérification d'étanchéité additionnels 100 décrits ci-dessus. Le dispositif de vérification 10 ne comprend donc pas de moyens le rendant adapté pour vérifier l'étanchéité de la surface d'étanchéité intérieure 18 par rapport à la surface d'étanchéité extérieure complémentaire 28 et de la surface d'étanchéité extérieure 20 par rapport à la surface d'étanchéité intérieure complémentaire 30 lorsqu'elles sont soumises à une pression donnée, dite pression de vérification, et pendant une durée déterminée.

Ces moyens de vérification sont les moyens 100 indiqués d'une manière schématique sur la figure 5 et décrits ci-dessus.

D'une manière générale, ce mode de réalisation comporte les caractéristiques suivantes :
Dispositif de vérification 10 de l'étanchéité d'une jonction tubulaire qui comprend une garniture d'étanchéité 8 et un bout à emboîtement 4 muni d'un logement 32 de garniture d'étanchéité, caractérisé en ce que le dispositif de vérification 10 comprend des moyens de vérification 100 adaptés pour vérifier l'étanchéité de la jonction tubulaire en présence d'un liquide sous pression circulant dans la jonction tubulaire.

Selon une caractéristique particulière, le dispositif de vérification 10 comprend
- une cavité de vérification 40,
- la cavité de vérification est ménagée dans la garniture d'étanchéité ou dans le logement 32 de garniture d'étanchéité, et
- les moyens de vérification 100 comprennent des moyens de détection d'un liquide 104, 108, 110, 112 présent dans la cavité de vérification 40, notamment un capteur de liquide, et de préférence des éléments conducteurs électriques 104, 108 disposés dans la cavité de vérification.

Le dispositif de vérification de l'étanchéité selon l'invention permet avantageusement de vérifier l'étanchéité de la jonction tubulaire 2 établie avant la mise en pression de l'installation tubulaire et en l'absence de fluide sous pression circulant dans la jonction tubulaire et permet donc immédiatement après la pose de la jonction tubulaire de vérifier l'état de la jonction tubulaire. Le dispositif de vérification est en outre économique étant donné que soit il ne nécessite pas de modification structurelle du bout uni et du bout à emboitement, soit il ne nécessite pas de modification structurelle du bout uni et de la garniture d'étanchéité.

## Revendications

1. Dispositif de vérification (10) de l'étanchéité d'une jonction tubulaire qui comprend une garniture d'étanchéité (8), munie d'un corps d'étanchéité (24), un bout à emboîtement (4) muni d'un logement (32) de garniture d'étanchéité, et un bout uni (6) inséré dans la garniture d'étanchéité,
le dispositif de vérification (10) comprenant
- une cavité de vérification (40) et
- un canal de mise sous pression (42) adapté pour relier la cavité de vérification à des moyens de mise sous pression (46) ou à des moyens de mise sous dépression,
la cavité de vérification étant ménagée dans la garniture d'étanchéité,
le corps d'étanchéité (24) définissant une surface d'étanchéité extérieure complémentaire (28) et une surface d'étanchéité intérieure complémentaire (30), et
à l'état monté de la jonction tubulaire, la surface d'étanchéité extérieure complémentaire (28) s'appliquant sur une surface d'étanchéité intérieure (18) du bout à emboîtement et la surface d'étanchéité intérieure complémentaire (30) s'appliquant sur une surface d'étanchéité extérieure (20) du bout uni, **caractérisé en ce que**
soit la cavité de vérification (40) débouche sur la surface d'étanchéité extérieure complémentaire (28),
soit la cavité de vérification (40) débouche sur la surface d'étanchéité extérieure complémentaire (28) et sur la surface d'étanchéité intérieure complémentaire (30) et **en ce que**
le canal de mise sous pression (42) est ménagé dans la garniture d'étanchéité.

2. Dispositif de vérification de l'étanchéité d'une jonction tubulaire selon la revendication 1, dans lequel la cavité de vérification comprend au moins une gorge circonférentielle (50, 52), notamment faisant tout le tour de la garniture d'étanchéité (8) ou du logement (32).

3. Dispositif de vérification de l'étanchéité d'une jonction tubulaire selon la revendication 1 ou 2, dans lequel le dispositif de vérification comprend des moyens de mise sous pression (46) ou des moyens de mise sous dépression adaptés pour être raccordés au canal de mise sous pression (42) et dans lequel les moyens de mise sous pression (46) comprennent au moins l'un des éléments suivants :
- un générateur de pression (62), notamment une pompe, et le cas échéant une valve (60) raccordée au canal de mise sous pression, le générateur de pression étant notamment adapté pour être connecté à la valve,
- un dispositif de réserve de gaz sous pression, notamment une chambre sous pression incorporée dans la garniture d'étanchéité, relié au canal de mise sous pression (42), et un dispositif de libération, notamment un dispositif percuteur, adapté pour libérer le gaz sous pression vers le canal de mise sous pression;
- un dispositif générateur de gaz (120) adapté pour générer un gaz sous pression par une réaction chimique de composés solides ou liquides, et un dispositif d'amorçage (122), tel qu'un percuteur (132), adapté pour initier la réaction chimique entre les composés ;
- une cavité de génération de pression, remplie d'un gaz ou d'un mélange de gaz, notamment d'un gaz inerte, ménagée à l'intérieur de la garniture d'étanchéité et qui par la compression de la garniture d'étanchéité lors de l'emboitage génère une augmentation de pression dans la cavité de vérification ou
dans lequel les moyens de mise sous dépression comprennent :
- un générateur de dépression, notamment une pompe à vide, et le cas échéant une valve raccordée au canal de mise sous pression, le générateur de dépression étant notamment adapté pour être connecté à la valve.

4. Dispositif de vérification de l'étanchéité d'une jonction tubulaire selon la revendication 1 à 3, dans lequel le dispositif de vérification de l'étanchéité comprend un dispositif de mesure (70) adapté pour relever la pression établie par les moyens de mise sous pression (46) dans la cavité de vérification (40), et notamment de vérifier si cette pression est au-delà d'un seuil déterminé et/ou est maintenue au-delà d'une durée déterminée.

5. Dispositif de vérification de l'étanchéité d'une jonction tubulaire selon la revendication 4, dans lequel le dispositif de mesure comprend :
- un capteur de pression mécanique, qui est notamment adapté pour générer un changement d'état ou de position d'un indicateur mécanique, électrique ou optique, au cas où la pression est au-delà d'un seuil déterminé et/ou est maintenue au-delà d'une durée déterminée ; ou
- un capteur de pression électrique (140), notamment un capteur piézo-électrique ; ou
- une combinaison des capteurs de pression mécanique et de pression électrique.

6. Dispositif de vérification de l'étanchéité d'une jonction tubulaire selon la revendication 4 ou 5, dans lequel le dispositif de vérification de l'étanchéité comprend un dispositif d'affichage (72) adapté pour afficher la pression relevée par le dispositif de mesure (70).

7. Dispositif de vérification de l'étanchéité d'une jonction tubulaire selon la revendication 6, dans lequel
- le dispositif d'affichage comprend un téléphone portable, un assistant personnel digital (PDA), ou un ordinateur,
notamment dans lequel le dispositif d'affichage est adapté pour relever l'information concernant la pression et est adapté pour émettre un rapport sur l'étanchéité de la jonction, et/ou dans lequel le dispositif d'affichage est adapté pour géolocaliser la position de la jonction tubulaire, et/ou dans lequel le dispositif d'affichage est relié à un logiciel connecté par internet ou un autre réseau de données, et qui est adapté pour alimenter une base de données à distance et permet un suivi à distance de l'avancement du chantier de pose.

8. Dispositif de vérification de l'étanchéité d'une jonction tubulaire selon l'une quelconque des revendications 1 à 7,
- dans lequel le canal de mise sous pression (42) est ménagé dans la garniture d'étanchéité ; et
- dans lequel les moyens de mise sous pression (46) comprennent une protubérance (150) ayant un conduit de connexion (152) qui est en liaison fluidique avec le canal de mise sous pression (42) et qui traverse la protubérance (150).

9. Dispositif de vérification de l'étanchéité d'une jonction tubulaire selon la revendication 8, dans lequel la protubérance (150) est fixée à un talon d'ancrage (22) de la garniture d'étanchéité.

10. Dispositif de vérification selon la revendication 8 ou 9, dans lequel la protubérance (150) ne comprend pas et ne contient pas de valve anti-retour disposée dans le conduit de connexion.

11. Dispositif de vérification de l'étanchéité d'une jonction tubulaire selon l'une quelconque des revendications 1 à 10, dans lequel le dispositif de vérification de l'étanchéité comprend des moyens de vérification additionnels (100) adaptés pour vérifier l'étanchéité de la jonction tubulaire en présence d'un liquide sous pression.

12. Dispositif de vérification de l'étanchéité d'une jonction tubulaire selon la revendication 11, dans lequel les moyens de vérification additionnels (100) comprennent des moyens de détection d'un liquide (104, 108, 110, 112) présent dans la cavité de vérification (40), notamment un capteur de liquide, et de préférence des éléments conducteurs électriques (104, 108) disposés dans la cavité de vérification.

13. Dispositif de vérification (10) de l'étanchéité d'une jonction tubulaire selon l'une quelconque des revendications 1 à 12, dans lequel
- le dispositif de vérification (10) comprend des moyens de vérification (100) adaptés pour vérifier l'étanchéité de la jonction tubulaire en présence d'un liquide sous pression circulant dans la jonction tubulaire, et
- les moyens de vérification (100) comprennent des moyens de détection d'un liquide (104, 108, 110, 112) présent dans la cavité de vérification (40), notamment un capteur de liquide, et de préférence des éléments conducteurs électriques (104, 108) disposés dans la cavité de vérification.

14. Jonction tubulaire (2), du type comprenant :
- un bout à emboîtement (4) ;
- une garniture d'étanchéité (8) et
- un bout uni (6),
**caractérisée en ce que** la jonction tubulaire comprend un dispositif de vérification (10) de l'étanchéité selon l'une quelconque des revendications précédentes.

15. Utilisation d'un dispositif de vérification de l'étanchéité d'une jonction tubulaire comprenant une garniture d'étanchéité (8), un bout à emboîtement (4) muni d'un logement (32) de garniture d'étanchéité, et un bout uni (6), **caractérisée en ce que**
le dispositif de vérification est un dispositif selon l'une quelconque des revendications 1 à 13 et l'utilisation comprend les étapes successives suivantes :
- établissement de la jonction tubulaire par insertion de la garniture d'étanchéité dans le bout à emboîtement (4) et par insertion du bout uni (6) dans la garniture d'étanchéité,
- établissement de la pression du fluide ou d'une dépression dans la cavité de vérification (40) par le canal de mise sous pression (42),
- vérification de la tenue en pression du fluide sous pression dans la cavité de vérification (40), ou de la tenue d'une dépression dans la cavité de vérification et/ou
- vérification de l'étanchéité de la jonction tubulaire en présence d'un liquide sous pression circulant dans la jonction tubulaire par les moyens de vérification (100) adaptés pour vérifier l'étanchéité de la jonction tubulaire en présence d'un liquide sous pression circulant dans la jonction tubulaire.

## Patentansprüche

1. Prüfvorrichtung (10) der Dichtigkeit einer Rohrverbindung, die eine Dichtungspackung (8), die mit einem Dichtungskörper (24) versehen ist, ein Einsteckende (4), das mit einer Aufnahme (32) der Dichtungspackung versehen ist, und ein Einheitsende (6), das in die Dichtungspackung eingesetzt ist, umfasst,
die Prüfvorrichtung (10) umfassend
- einen Überprüfungshohlraum (40) und
- einen Druckaufbaukanal (42), der angepasst ist, um den Überprüfungshohlraum mit einer Druckaufbaueinrichtung (46) oder einer Unterdruckaufbaueinrichtung zu verbinden,
wobei der Überprüfungshohlraum in der Dichtungspackung ausgebildet ist,
wobei der Dichtungskörper (24) eine komplementäre äußere Dichtungsfläche (28) und eine komplementäre innere Dichtungsfläche (30) definiert, und
die komplementäre äußere Dichtungsfläche (28) in dem montierten Zustand der Rohrverbindung an einer inneren Dichtungsfläche (18) des Einsteckendes anliegt und die komplementäre innere Dichtungsfläche (30) an einer äußeren Dichtungsfläche (20) des Einsteckendes anliegt, **dadurch gekennzeichnet, dass**
entweder der Überprüfungshohlraum (40) in die komplementäre äußere Dichtungsfläche (28) mündet,
oder der Überprüfungshohlraum (40) in die komplementäre äußere Dichtungsfläche (28) und die komplementäre innere Dichtungsfläche (30) mündet, und dadurch, dass
der Druckaufbaukanal (42) in der Dichtungspackung ausgebildet ist.

2. Prüfvorrichtung der Dichtigkeit einer Rohrverbindung nach Anspruch 1, wobei der Überprüfungshohlraum mindestens eine umlaufende Nut (50, 52) aufweist, die insbesondere um die Dichtungspackung (8) oder die Aufnahme (32) verläuft.

3. Prüfvorrichtung der Dichtigkeit einer Rohrverbindung nach Anspruch 1 oder 2, wobei die Prüfvorrichtung Druckaufbaueinrichtungen (46) oder Unterdruckaufbaueinrichtungen umfasst, die angepasst sind, um mit dem Druckaufbaukanal (42) verbunden zu werden, und wobei die Druckaufbaueinrichtungen (46) mindestens eines der folgenden Elemente umfassen:
- einen Druckerzeuger (62), insbesondere eine Pumpe, und gegebenenfalls ein Ventil (60), die mit dem Druckaufbaukanal verbunden sind, wobei der Druckerzeuger insbesondere angepasst ist, um mit dem Ventil verbunden zu werden,
- eine Druckgas-Reservevorrichtung, insbesondere eine in die Dichtungspackung integrierte Druckkammer, die mit dem Druckaufbaukanal (42) verbunden ist, und eine Freisetzvorrichtung, insbesondere eine Schlagvorrichtung, die angepasst ist, um das Druckgas in Richtung des Druckaufbaukanals freizusetzen;
- eine Gaserzeugungsvorrichtung (120), die angepasst ist, um durch eine chemische Reaktion fester oder flüssiger Verbindungen ein unter Druck stehendes Gas zu erzeugen, und eine Zündvorrichtung (122), wie z. B. einen Schlagbolzen (132), die angepasst ist, um die chemische Reaktion zwischen den Verbindungen einzuleiten;
- einen mit einem Gas oder einem Gasgemisch, insbesondere einem Inertgas, gefüllten Druckerzeugungshohlraum, der im Inneren der Dichtungspackung ausgebildet ist und durch die Kompression der Dichtungspackung beim Zusammenstecken einen Druckanstieg in dem Überprüfungshohlraum erzeugt, oder
wobei die Druckaufbaueinrichtungen Folgendes umfassen:
- einen Unterdruckerzeuger, insbesondere eine Unterdruckpumpe, und gegebenenfalls ein Ventil, die mit dem Druckaufbaukanal verbunden sind, wobei der Unterdruckerzeuger insbesondere angepasst ist, um mit dem Ventil verbunden zu werden.

4. Prüfvorrichtung der Dichtigkeit einer Rohrverbindung nach Anspruch 1 bis 3, wobei die Prüfvorrichtung der Dichtigkeit eine Messvorrichtung (70) umfasst, die angepasst ist, um den durch die Druckaufbaueinrichtungen (46) in dem Überprüfungshohlraum (40) aufgebauten Druck zu erfassen und insbesondere zu überprüfen, ob dieser Druck über einem bestimmten Schwellenwert ist und/oder über eine bestimmte Dauer hinaus aufrechterhalten wird.

5. Prüfvorrichtung der Dichtigkeit einer Rohrverbindung nach Anspruch 4, wobei die Messvorrichtung Folgendes umfasst:
- einen mechanischen Drucksensor, der insbesondere angepasst ist, um eine Zustands- oder Positionsänderung eines mechanischen, elektrischen oder optischen Indikators zu erzeugen, wenn der Druck über einem bestimmten Schwellenwert ist und/oder über eine bestimmte Zeitdauer hinaus aufrechterhalten wird; oder
- einen elektrischen Drucksensor (140), insbesondere einen piezoelektrischen Sensor; oder
- eine Kombination aus einem mechanischen und einem elektrischen Drucksensor.

6. Prüfvorrichtung der Dichtigkeit einer Rohrverbindung nach Anspruch 4 oder 5, wobei die Prüfvorrichtung der Dichtigkeit eine Anzeigevorrichtung (72) umfasst, die angepasst ist, um den von der Messvorrichtung (70) erfassten Druck anzuzeigen.

7. Prüfvorrichtung der Dichtigkeit einer Rohrverbindung nach Anspruch 6, wobei
- die Anzeigevorrichtung ein Mobiltelefon, einen digitalen persönlichen Assistenten (PDA) oder einen Computer umfasst,
insbesondere wobei die Anzeigevorrichtung angepasst ist, um die Druckinformationen zu erfassen und angepasst ist, um einen Bericht über die Dichtigkeit der Verbindung auszugeben, und/oder wobei die Anzeigevorrichtung angepasst ist, um die Position der Rohrverbindung zu geolokalisieren, und/oder wobei die Anzeigevorrichtung mit einer Software verbunden ist, die über das Internet oder ein anderes Datennetzwerk verbunden ist, und die angepasst ist, um eine Datenbank ferngesteuert zu speisen und eine Fernüberwachung des Fortschritts der Verlegebaustelle zu ermöglichen.

8. Prüfvorrichtung der Dichtigkeit einer Rohrverbindung nach einem der Ansprüche 1 bis 7,
- wobei der Druckaufbaukanal (42) in der Dichtungspackung ausgebildet ist; und
- wobei die Druckaufbaueinrichtungen (46) einen Vorsprung (150) umfassen, der eine Verbindungsleitung (152) aufweist, die in Fluidverbindung mit dem Druckaufbaukanal (42) ist und den Vorsprung (150) durchquert.

9. Prüfvorrichtung der Dichtigkeit einer Rohrverbindung nach Anspruch 8, wobei der Vorsprung (150) an einem Verankerungsansatz (22) der Dichtungspackung befestigt ist.

10. Prüfvorrichtung nach Anspruch 8 oder 9, wobei der Vorsprung (150) kein Rückschlagventil umfasst und enthält, das in der Verbindungsleitung angeordnet ist.

11. Prüfvorrichtung der Dichtigkeit einer Rohrverbindung nach einem der Ansprüche 1 bis 10, wobei die Prüfvorrichtung der Dichtigkeit zusätzliche Prüfeinrichtungen (100) umfasst, die angepasst sind, um die Dichtigkeit der Rohrverbindung in Anwesenheit einer unter Druck stehenden Flüssigkeit zu prüfen.

12. Vorrichtung zum Prüfen der Dichtigkeit einer Rohrverbindung nach Anspruch 11, wobei die zusätzlichen Prüfeinrichtungen (100) Einrichtungen zum Erfassen einer in dem Überprüfungshohlraum (40) vorhandenen Flüssigkeit (104, 108, 110, 112), insbesondere einen Flüssigkeitssensor, und vorzugsweise elektrisch leitende Elemente (104, 108), die in dem Überprüfungshohlraum angeordnet sind, umfassen.

13. Prüfvorrichtung (10) der Dichtigkeit einer Rohrverbindung nach einem der Ansprüche 1 bis 12, wobei
- die Prüfvorrichtung (10) Prüfeinrichtungen (100) umfasst, die angepasst sind, um die Dichtigkeit der Rohrverbindung in Anwesenheit einer unter Druck stehenden Flüssigkeit, die in der Rohrverbindung zirkuliert, zu prüfen, und
- die Prüfeinrichtungen (100) Einrichtungen zum Erfassen einer in dem Überprüfungshohlraum (40) vorhandenen Flüssigkeit (104, 108, 110, 112), insbesondere einen Flüssigkeitssensor, und vorzugsweise elektrisch leitende Elemente (104, 108), die in dem Überprüfungshohlraum angeordnet sind, umfassen.

14. Rohrverbindung (2), von der Art, die Folgendes umfasst:
- ein Einsteckende (4);
- eine Dichtungspackung (8) und
- ein Einheitsende (6),
**dadurch gekennzeichnet, dass** die Rohrverbindung eine Prüfvorrichtung (10) der Dichtigkeit nach einem der vorherigen Ansprüche umfasst.

15. Verwendung einer Prüfvorrichtung der Dichtigkeit einer Rohrverbindung, umfassend eine Dichtungspackung (8), ein Einsteckende (4), das mit einer Aufnahme (32) für die Dichtungspackung versehen ist, und ein Einheitsende (6), **dadurch gekennzeichnet, dass**
die Prüfvorrichtung nach einem der Ansprüche 1 bis 13 ist und die Verwendung die folgenden aufeinanderfolgenden Schritte umfasst:
- Herstellen der Rohrverbindung durch Einsetzen der Dichtungspackung in das Einsteckende (4) und durch Einsetzen des Einheitsendes (6) in die Dichtungspackung,
- Aufbauen des Drucks des Fluids oder eines Unterdrucks in dem Überprüfungshohlraum (40) durch den Druckaufbaukanal (42),
- Überprüfen, ob das Druckverhalten des Fluids unter Druck in dem Überprüfungshohlraum (40), oder des Verhaltens eines Unterdrucks in dem Überprüfungshohlraum, und/oder
- Überprüfen der Dichtigkeit der Rohrverbindung in Anwesenheit einer unter Druck stehenden Flüssigkeit, die in der Rohrverbindung zirkuliert, durch die Prüfeinrichtungen (100), die angepasst sind, um die Dichtigkeit der Rohrverbindung in Anwesenheit einer unter Druck stehenden Flüssigkeit, die in der Rohrverbindung zirkuliert, zu überprüfen.

## Claims

1. A device (10) for checking the seal of a tubular joint that comprises a sealing liner (8), provided with a sealing body (24), a bell end (4) provided with a sealing liner housing (32) and a spigot end (6) inserted in the sealing liner,
the checking device (10) comprising
- a check cavity (40), and
- a pressurization channel (42) designed to connect the check cavity with pressurizing means (46) or vacuum means,
the check cavity being arranged in the sealing liner,
the sealing body (24) defining a complementary outer sealing surface (28) and a complementary inner sealing surface (30), and
in the mounted state of the tubular joint, the complementary outer sealing surface (28) presses on an inner sealing surface (18) of the bell end and the complementary inner sealing surface (30) presses on an outer sealing surface (20) of the spigot end, **characterized in that**
either the check cavity (40) emerges on the complementary outer sealing surface (28),
or the check cavity (40) emerges on the complementary outer sealing surface (28) and on the complementary inner sealing surface 30, and **in that**
the pressurization channel (42) is arranged in the sealing liner.

2. The device for checking the seal of a tubular joint according to claim 1, wherein the check cavity comprises at least one circumferential groove (50, 52), in particular going all the way around the sealing liner (8) or the housing (32).

3. The device for checking the seal of a tubular joint according to claim 1 or 2, wherein the checking device comprises pressurizing means (46) or vacuum means suitable for being coupled to the pressurization channel (42) and in which the pressurizing means (46) comprise at least one of the following elements:
- a pressure generator (62), in particular a pump, and, as the case may be, a valve (60) coupled to the pressurization channel, the pressure generator in particular being suitable for being connected to the valve,
- a pressurized gas reserve device, in particular a pressurization chamber incorporated into the sealing liner, connected to the pressurization channel (42), and a release device, in particular a striker device, suitable for releasing the pressurized gas toward the pressurization channel;
- a gas generator device (120) suitable for generating a pressurized gas through a chemical reaction of solid or liquid compounds, and a primer device (122), such as a striker (132), suitable for initiating the chemical reaction between the compounds;
- a pressure generating cavity, filled with a gas or a mixture of gases, in particular an inert gas, arranged inside the sealing liner and which, by compression of the sealing liner during the nesting, generates a pressure increase in the check cavity, or
wherein the vacuum means comprise:
- a vacuum generator, in particular a vacuum pump, and in particular a valve coupled to the pressurization channel, the vacuum generator in particular being suitable for being connected to the valve.

4. The device for checking the seal of a tubular joint according to claim 1 to 3, wherein the seal checking device comprises a measuring device (70) suitable for reading the pressure established by the pressurizing means (46) in the check cavity (40), and in particular checking whether this pressure is beyond a determined threshold and/or is kept beyond a determined threshold.

5. The device for checking the seal of a tubular joint according to claim 4, wherein the measuring device comprises:
- a mechanical pressure sensor, which is in particular suitable for generating a state or position change of a mechanical, electrical or optical indicator, in the case where the pressure is beyond a determined threshold and/or is kept beyond a determined duration; or
- an electrical pressure sensor (140), in particular a piezoelectric sensor; or
- a combination of mechanical pressure and electrical pressure sensors.

6. The device for checking the seal of a tubular joint according to claim 4 or 5, wherein the seal checking device comprises a display device (72) suitable for displaying the pressure read by the measuring device (70).

7. The device for checking the seal of a tubular joint according to claim 6, wherein
- the display device comprises a mobile telephone, a personal digital assistant (PDA), or a computer,
in particular in which the display device is suitable for obtaining the information regarding the pressure and is suitable for issuing a report on the sealing of the joint, and/or wherein the display device is suitable for geo-locating the position of the tubular joint, and/or wherein the display device is connected to software connected by Internet or another data network, and which is suitable for supplying a remote database and allows remote monitoring of the progress of the laying worksite.

8. A device for checking the seal of a tubular joint according to any one of claims 1 to 7,
- wherein the pressurization channel (42) is arranged in the sealing liner; and
- wherein the pressurization means (46) comprise a protuberance (150) having a connection duct (152) that is in fluid connection with the pressurization channel (42) and that passes through the protuberance (150).

9. The device for checking the seal of a tubular joint according to claim 8, wherein the protuberance (150) is fastened to an anchoring lug (22) of the sealing liner.

10. The checking device according to claim 8 or 9, wherein the protuberance (150) does not comprise and does not contain a non-return valve arranged in the connection duct.

11. The device for checking the seal of a tubular joint according to any one of claims 1 to 10, wherein the seal checking device comprises additional checking means (100) suitable for checking the seal of the tubular joint in the presence of a pressurized liquid.

12. The device for checking the seal of a tubular joint according to claim 11, wherein the additional checking means (100) comprise means for detecting a liquid (104, 108, 110, 112) present in the checking cavity (40), in particular a liquid sensor, and preferably electrically conductive elements (104, 108) arranged in the checking cavity.

13. A device (10) for checking the seal of a tubular joint according to any one of claims 1 to 12, wherein
- the checking device (10) comprises checking means (100) suitable for checking the seal of the tubular joint in the presence of a pressurized liquid circulating in the tubular joint, and
- the checking means (100) comprise means for detecting a liquid (104, 108, 110, 112) present in the checking cavity (40), in particular a liquid sensor, and preferably electrically conductive elements (104, 108) arranged in the checking cavity.

14. A tubular joint (2), of the type comprising:
- a fitting end (4);
- a sealing liner (8); and
- a spigot end (6),
**characterized in that** the tubular joint comprises a seal checking device (10) according to any one of the preceding claims.

15. A use of a device for checking the seal of a tubular joint comprising a sealing liner (8), a bell end (4) provided with a sealing liner housing (32), and a spigot end (6), **characterized in that**
the checking device is a device according to any one of claims 1 to 13 and the use comprises the following successive steps:
- establishing the tubular joint by inserting the sealing liner into the bell end (4) and by inserting the spigot end (6) into the sealing liner,
- establishing the pressure of the fluid or a vacuum in the check cavity (40) through the pressurization channel (42),
- checking the holding of the pressure of the pressurized fluid in the check cavity (40), or the holding of a vacuum in the check cavity, and/or
- checking the sealing of the tubular joint in the presence of a pressurized liquid circulating in the tubular joint by the checking means (100) suitable for checking the sealing of the tubular joint in the presence of a pressurized liquid circulating in the tubular joint.
